# EUROPÄISCHE PATENTSCHRIFT

(11) **EP 1 301 329 B1**
(45) Veröffentlichungstag und Bekanntmachung des Hinweises auf die Patenterteilung: **08.06.2005**
(21) Anmeldenummer: 01955243.9
(22) Anmeldetag: 12.07.2001
(51) Int. Cl.: B29C 49/20

(54) **Verfahren zum Herstellen eines Kunststoffblasteils mit Innenversteifung und Kunststoffblasteil mit einem zwei Blasteilhälften aufweisenden Blasteilkörper.**
Method for the production of a plastic blown piece with an internal reinforcement and plastic blown piece comprising two blown piece-halves
Procédé de fabrication d'un élément soufflé en plastique renfermant une partie de renforcement et élément soufflé en plastique composé d'un corps formé de deux moitiés soufflées.

(30) Priorität: 20.07.2000 DE 10035185
(43) Veröffentlichungstag der Anmeldung: 16.04.2003
(73) Patentinhaber: Möller Plast GmbH, 33649 Bielefeld (DE)
(72) Erfinder: WROBBEL, Werner, 33335 Gütersloh (DE)
(74) Vertreter: Schirmer, Siegfried, Dipl.-Ing.
(86) Internationale Anmeldenummer: PCT/DE2001/002642
(87) Internationale Veröffentlichungsnummer: WO 2002/007950

(56) Entgegenhaltungen:
- EP-A- 0 514 555
- EP-A- 1 013 403
- DE-A- 4 315 838
- US-A- 5 776 568
- PATENT ABSTRACTS OF JAPAN vol. 004, no. 041 (M-005), 29. März 1980 (1980-03-29) & JP 55 011823 A (SHOWA YUKA KK), 28. Januar 1980 (1980-01-28)
- PATENT ABSTRACTS OF JAPAN vol. 010, no. 191 (M-495), 4. Juli 1986 (1986-07-04) & JP 61 035930 A (INOUE MTP CO LTD), 20. Februar 1986 (1986-02-20)

## Beschreibung

Die Erfindung betrifft ein Verfahren zum Herstellen eines Kunststoffblasteils mit Innenversteifung und ein Kunststoffblasteil mit einem zwei Blasteilhälften aufweisenden Blasteilkörper, insbesondere hergesteilt nach dem Verfahren.

Bei Bauteilen, die nach dem Extrusionsblasverfahren hergestellt werden, bestehen in bestimmten Anwendungsfällen Anforderungen nach hoher Steifigkeit und geringer thermischer Ausdehnung, d.h. geringer Längenveränderung bei unterschiedlichen Temperaturen. Derartige Bauteile werden bspw. in der Kraftfahrzeugindustrie für Armaturenbretter, Hutablagen und Abdeckungen, insbesondere im Kofferraumbereich, eingesetzt. Hohe Belastungen können bspw. dann auftreten, wenn im Falle eines Unfalls ein Gegenstand auf das Bauteil aufprallt oder eine Ablage durch Auflegen schwerer Gegenstände belastet wird. Eine möglichst geringe thermische Ausdehnung ist deshalb wünschenswert, damit bei wechselnden Temperaturen keine größeren maßlichen Änderungen der Bauteile auftreten, weil ansonsten die benötigten Ausgleichsfugen bzw. Spaltmaße zu einer optischen Beeinträchtigung führen.

Andererseits sollen nach Möglichkeit preiswerte Werkstoffe eingesetzt werden, die von ihren Grundeigenschaften her keine hohen Belastungen ermöglichen und deren Wärmedehnung relativ groß ist, so daß je nach Bauteilgröße häufig ein Spaltmaß erforderlich ist, das mit einem bestimmten Stiel des Fahrzeugs nicht in Einklang zu bringen ist.

Eine bekannte Möglichkeit, die Festigkeit von Bauteilen zu verbessern und die thermische Ausdehnung zu reduzieren, besteht darin, dem Ausgangwerkstoff Füllstoffe in Form von Fasermaterial, bspw. in Form von Glasfasern, in bestimmten Mengenanteilen zuzumischen, was allerdings zu einer Beeinträchtigung der Verarbeitungseigenschaften und der Oberflächenqualität führt.

Derartige Maßnahmen wirken sich beim Extrusionsblasen besonders negativ aus, da nach diesem Verfahren hergestellte Bauteile häufig eine komplizierte Geometrie aufweisen und ein frisch extrudierter, runder oder ovalisierter Ausgangsschlauch durch den Blasvorgang eine gewisse Verstreckung erfährt. Durch eine Füllung des Ausgangsmaterials bspw. mit Fasern wird die maximal mögliche Verstreckung jedoch erheblich eingeschränkt, so daß bestimmte Formteilgeometrien nicht mehr möglich sind bzw. gefüllte Materialien nicht verwendet werden. Daraus ergibt sich, daß die Anforderungen nach hoher Steifigkeit und geringer thermischer Ausdehnung durch Verwendung von Fasermaterial bei Anwendung des Extrusionsblasverfahrens nicht gleichzeitig in dem gewünschten Maße erreichbar sind.

Die US 5,776,568 zeigt ein Kunststoffblasteil mit einem innenliegenden Verstärkungsrahmen, durch den Längskammern gebildet werden. Sämtliche Kammern werden teilweise durch den Blasteilkörper gebildet, so daß bei einem Armaturenbrett, das entsprechend der Vorgehensweise hergestellt wird, die Luftkanäle keinen Abstand zu dem Blasteilkörper aufweisen. Ein ähnliches Verfahren zur Herstellung von Filtern ist aus DE 43 158 38 bekannt. Danach werden zwei Filterkammern gebildet, die jeweils durch den äußeren Blasteilkörper begrenzt werden.

Der Erfindung liegt die Aufgabe zugrunde, ein Verfahren zum Herstellen von Bauteilen mit Innenversteifung anzugeben, wobei nach dem Extrusionsblasverfahren gearbeitet werden kann, die hergestellten Bauteile eine hohe Steifigkeit, geringe thermische Ausdehnung und gute Oberflächeneigenschaften aufweisen.

Erfindungsgemäß wird diese Aufgabe durch ein Verfahren zum Herstellen von Kunststoffblasteilen mit Innenversteifung durch die im selbständigen Anspruch 1 aufgezeigten Verfahrensschritte gelöst.

Zweckmäßige Ausgestaltungen des erfindungsgemäßen Verfahrens sind in den abhängigen Ansprüchen 2 bis 6 aufgezeigt.

Die Erfindung betrifft des weiteren ein Kunststoffblasteil mit einem zwei Blasteilhälften aufweisenden Blasteilkörper, bei dem zwischen zwei Blasteilhälften ein Versteifungsmaterial integriert ist, wobei die Blasteilhälften das Versteifungsmaterial ausschließlich an Verbindungsbereichen berühren und an den Verbindungsbereichen über das Versteifungsmaterial oder durch das Versteifungsmaterial hindurch verbunden sind, wobei das Versteifungsmaterial Luftkanäle aufweist, so daß zwischen den Luftkanälen und dem Blasteilkörper ein Zwischenraum besteht. Vorteilhafte Ausgestaltungen des erfindungsgemäßen Kunststoffblasteils sind in den abhängigen Ansprüchen 8 bis 18 aufgezeigt.

Ein Ausführungsbeispiel der Erfindung ist in der Zeichnung dargestellt und wird nachfolgend beschrieben. Die einzige Figur zeigt in einer Schnittansicht schematisch den Aufbau eines Kunststoffblasteils mit Innenversteifung.

Nach der Erfindung wird in einem ersten Schritt ein Versteifungsmaterial 1, bei dem es sich um ein in unterschiedlichster Weise ausgestaltetes Teil handeln kann, bspw. ein Blechteil, ein Naturfasermaterial, ein komplettes Einbauteil mit Funktionselementen wie bspw. Luftkanälen o.ä., unterhalb einer Extrusionsdüse einer Extrusionsblaseinrichtung positioniert wird. Je nach Anordnung kann sich die Extrusionsdüse bei dem dargestellten Bauteil entweder seitlich neben dem Versteifungsmaterial 1 oder oberhalb der Darstellungsebene über dem Versteifungsmaterial 1 befinden.

Das Versteifungsmaterial befindet sich hierbei innerhalb einer nicht dargestellten, geöffneten Extrusionsblasform, in der das gewünschte Kunststoffblasteil herzustellen ist.

In einem zweiten Schritt wird ein Extrusionsschlauch erzeugt bzw. aus der Extrusionsdüse ausgestoßen, wobei der frisch extrudierte Schlauch sich über das Versteifungsmaterial bewegt und dieses ohne Berührung damit in seinem Inneren umhüllt. Dabei ist das Versteifungsmaterial selbstverständlich so ausgelegt, daß es kleiner ist als der innere Schlauchdurchmesser und somit eine Berührung mit dem noch plastischen Schlauchmaterial ausgeschlossen wird.

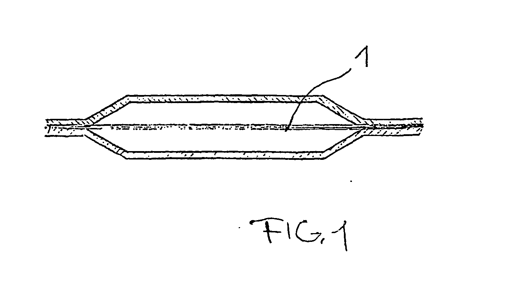

In einem dritten Schritt wird die Extrusionsblasform geschlossen und ein Blasteilkörper hergestellt, wobei Bereiche der Form Verbindungsbereiche des Extrusionsschlauchs und des Versteifungsmaterials zusammenbringen, so daß das Versteifungsmaterial in den Verbindungsbereichen eine innige Verbindung mit dem Blasteilkörper eingeht. In dem in Fig. 1 dargestellten Beispiel sind dies die äußeren Randbereiche (wenn Fig. 1 einen Querschnitt darstellt) bzw. Anfangs- und Endbereich (wenn Fig. 1 einen Längsschnitt darstellt), wobei jeweils ein Bereich einer Schlauchhälfte mit einem gegenüberliegenden Bereich der anderen Schlauchhälfte zusammengedrückt werden und zwischen sich einen entsprechenden Bereich des Versteifungsmaterials aufnehmen und sich innig damit verbinden. Die Verbindungsbereiche müssen nicht am Rand liegen, sondern können auch im Inneren des Blasteilkörpers verteilt angeordnet sein und kompakt bzw. punktförmig oder linienförmg gestaltet sein.

Das Versteifungsmaterial kann in den gesamten Konturbereich des herzustellenden Bauteils oder auch nur in Teilbereichen eingebracht werden.

Funktionell wird durch die Einbringung eines Versteifungsmaterials bzw. eines Einbauteils die Möglichkeit geschaffen, sowohl hohe mechanische als auch hohe thermische Beanspruchungen ohne größere Verformung bzw. Dehnung aufzunehmen, da die Beanspruchungen durch das innenliegende Versteifungsmaterial aufgenommen werden.

Weiterhin besteht aufgrund der verfahrenstechnischen Vorteile des Extrusionsblasverfahrens die Möglichkeit, bei Armaturenbrettern bzw. Instrumententafeln Luftkanäle in einem einstufigen Verfahrensschritt mit anzubringen. Hierbei besteht das Problem, daß eine Seite des Blasteils gleichzeitig die im Fahrzeug sichtbare und der Sonneneinstrahlung ausgesetzte Oberfläche bildet, die sich stark erwärmen kann und bei Inbetriebnahme einer Klimaanlage im Sommer erst auf eine bestimmte Temperatur abgekühlt werden muß, bevor sich die kühle Luft im Innenraum auswirkt. Mit Hilfe des erfindungsgemäßen Verfahrens besteht die Möglichkeit, mit einem integrierten Versteifungsmaterial den Innenraum eines Luftkanals in zwei Bereiche zu trennen, wobei der zur Außenseite liegende Teilbereich durch die eingeschlossene Luft der Isolation des auf der anderen Seite befindlichen Luftkanals dient. Zur Verwirklichung dieses Gedankens wird das Versteifungsmaterial als Einbauteil ausgeführt, welches Luftkanäle aufweist, wobei im fertigen Bauteil das Einbauteil bzw. Versteifungsmaterial von dem Extrusionsschlauch bzw. dem Blasteilkörper - mit Ausnahme der Verbindungsbereiche - getrennt ist, wie grundsätzlich in Fig. 1 dargestellt, so daß der Isoliereffekt aufgrund der zwischen Versteifungsmaterial und Blasteilkörper befindlichen Luft eintritt. Die Isolationswirkung kann noch verbessert werden, wenn das Versteifungsmaterial eine geringe Wärmeleitfähigkeit aufweist.

In weiterer Ausgestaltung kann das Versteifungsmaterial bzw. Einbauteil Funktionselemente wie Befestigungslaschen oder ―winkel aufweisen, die eine vollautomatische Montage, bspw. an A-Säulen von Kraftfahrzeugen, erleichtern.

In weiterer Ausgestaltung der Erfindung kann vorgesehen sein, daß das Versteifungsmaterial, z. B. ein Blechteil, nach Erzeugen des Extrusionsschlauchs an Schwachstellen auf- bzw. ausgeklappt und/oder an Scharnierbereichen scharniert, geschoben oder vorgeformt wird, um dem Teil eine bestimmte Form bzw. Größe zu geben, nachdem der Blasschlauch bereits ausgebildet und über das Teil gebracht worden ist. Auf diese Weise kann bspw. ein relativ großes bzw. breites Versteifungsteil innerhalb des Blasschlauchs positioniert werden. Das Versteifungsteil kann somit eine aufgeklappte bzw. durch Scharnierbewegung usw. geöffnete Größe haben, über die der Blasschlauch andernfalls nur schwierig hinwegzubewegen wäre. Es besteht somit die Möglichkeit, dem Versteifungsteil seine endgültige Größe erst innerhalb des Blasschlauchs zu geben.

Weiterhin kann zusätzlich zu dem innen angeordneten Versteifungsmaterial ein außenliegendes Verstärkungsmaterial verwendet werden, das bspw. in Form eines Gewebes oder Gewirkes aus z.B. Glasfasern, Kohlefasern, Naturfasern usw. oder einer Kombination ganzflächig oder teilweise in die Extrusionsblasform eingelegt wird und sich nach dem Schließen der Form mit dem Extrusionsschlauch flächig verbindet. Dadurch können gezielt verstärkte Bereiche und Sollbruchstellen bzw. Scharnierbereiche, z. B. für Airbags o.ä., geschaffen werden.

## Patentansprüche

1. Verfahren zum Herstellen eines Kunststoffblasteils mit Innenversteifung, mit den Schritten
- Positionieren eines Versteifungsmaterials innerhalb einer geöffneten Extrusionsblasform, das Luftkanäle aufweist,
- Erzeugen eines Extrusionsschlauchs, der sich über das Versteifungsmaterial bewegt und dieses ohne Berührung in seinem Inneren umhüllt,
- Schließen der Extrusionsblasform und Herstellen eines Blasteilkörpers, wobei Bereiche der Form Verbindungsbereiche von Extrusionsschlauch und Versteifungsmaterial zusammenbringen, so daß das Versteifungsmaterial in den Verbindungsbereichen eine innige Verbindung mit dem Blasteilkörper eingeht, und wobei zwischen den Luftkanälen und dem Blasteilkörper ein Zwischenraum besteht.

2. Verfahren nach Anspruch 1, **dadurch gekennzeichnet, daß** die Querabmessung des Versteifungsmaterials kleiner ist als die entsprechende Durchmesserabmessung des Extrusionsschlauchs.

3. Verfahren nach Anspruch 1 oder 2, **dadurch gekennzeichnet, daß** das Versteifungsmaterial Verformungsbereiche aufweist, so daß eine Verformung entsprechend der Kontur der Extrusionsblasform beim Schließen der Form erfolgt.

4. Verfahren nach Anspruch 1 oder 2, **dadurch gekennzeichnet, daß** das Versteifungsmaterial vorgeformt ist und seine Form beim Schließen der Extrusionsblasform nicht ändert.

5. Verfahren nach einem der Ansprüche 1 bis 4, **dadurch gekennzeichnet, daß** das Versteifungsmaterial nach Erzeugen des Extrusionsschlauchs an Schwachstellen geklappt und/oder scharniert wird.

6. Verfahren nach einem der vorangehenden Ansprüche, **dadurch gekennzeichnet, daß** in die Extrusionsblasform ganzflächig oder teilweise ein Verstärkungsmaterial eingelegt wird, das beim Herstellen des Blasteilkörpers mit dem Extrusionsschlauch flächig verbindet.

7. Kunststoffblasteil mit einem zwei Blasteilhälften aufweisenden Blasteilkörper, insbesondere hergestellt nach einem der vorangehenden Ansprüche, bei dem zwischen zwei Blasteilhälften ein Versteifungsmaterial integriert ist, wobei die Blasteilhälften das Versteifungsmateriat ausschließlich an Verbindungsbereichen berühren und an den Verbindungsbereichen über das Versteifungsmaterial oder durch das Versteifungsmaterial hindurch miteinander verbunden sind, **dadurch gekennzeichnet, daß** das Versteifungsmaterial Luftkanäle aufweist, wobei zwischen den Luftkanälen und dem Blasteilkörper ein Zwischenraum besteht.

8. Kunststoffblasteil nach Anspruch 7, **dadurch gekennzeichnet, daß** das Versteifungsmaterial ein Blechteil ist.

9. Kunststoffblasteil nach Anspruch 7 oder 8, **dadurch gekennzeichnet, daß** das Versteifungsmaterial gestanzte Ausschnitte aufweist.

10. Kunststofflbasteil nach einem der Ansprüche 7 bis 9, **dadurch gekennzeichnet, daß** das Versteifungsmaterial Funktionselemente wie Laschen oder Winkel zur Befestigung aufweist.

11. Kunststoffblasteil nach einem der Ansprüche 7 bis 10, **dadurch gekennzeichnet, daß** das Versteifungsmaterial ein Naturfasermaterial ist.

12. Kunststoffblasteil nach einem der Ansprüche 7 bis 11, **dadurch gekennzeichnet, daß** das Versteifungsmaterial eine faserverstärkte Platte oder ein faserverstärktes Bauteil ist.

13. Kunststoffblasteil nach einem der Ansprüche 7 bis 12, **dadurch gekennzeichnet, daß** das Versteifungsmaterial ein Einbauteil mit Funktionselementen ist.

14. Kunststoffblasteil nach einem der Ansprüche 7 bis 13, **dadurch gekennzeichnet, daß** ein Verstärkungsmaterial ganzflächig oder teilweise auf der Außenfläche des Blasteilkörpers angeordnet ist.

15. Kunststoffblasteil nach Anspruch 14, **dadurch gekennzeichnet, daß** das Verstärkungsmaterial bahnförmig ist.

16. Kunststoffblasteil nach Anspruch 13 oder 14, **dadurch gekennzeichnet, daß** das Verstärkungsmaterial Sollbruchstellen und/oder Scharnierbereiche aufweist.

17. Kunststoffblasteil nach einem der Ansprüche 7 bis 16, **dadurch gekennzeichnet, daß** das Versteifungsmaterial durch Anordnung von Schwachstellen klappbar ist.

18. Kunststoffblasteil nach einem der Ansprüche 7 bis 17, **dadurch gekennzeichnet, daß** das Versteifungsmaterial Scharnier- oder Schiebebereiche aufweist.

## Claims

1. Method of producing a plastics material blow-moulded part with internal stiffening, comprising the steps
- positioning a stiffening material within an opened extrusion blow-moulding mould, which has air channels,
- producing an extrusion hose which moves over the stiffening material and encases this without contact in its interior,
- closing the extrusion blow-moulding mould and producing a blow-moulded part body, wherein regions of the mould bring together connecting regions of extrusion hose and stiffening material so that the stiffening material in the connecting regions enters into an intimate connection with the blow-moulded part body and wherein an intermediate space is present between the air channels and the blow-moulded part body.

2. Method according to claim 1, **characterised in that** the transverse dimension of the stiffening material is less than the corresponding diametral dimension of the extrusion hose.

3. Method according to claim 1 or 2, **characterised in that** the stiffening material has deformations so that a deformation takes place in correspondence with the contour of the extrusion blow-moulding mould on closing of the mould.

4. Method according to claim 1 or 2, **characterised in that** the stiffening material is preshaped and its form does not change on closing of the extrusion blow-moulding mould.

5. Method according to one of claims 1 to 4, **characterised in that** the stiffening material after producing extrusion hose is folded and/or hinged at weakened locations.

6. Method according to one of the preceding claims, **characterised in that** a stiffening material which on production of the blow-moulded part body is connected over an area with the extrusion hose is placed in the extrusion blow-moulding mould over the whole area or in part.

7. Plastics material blow-moulded part with a blow-moulded part body having two blow-moulded part halves, particularly produced according to one of the preceding claims, in which a stiffening material is integrated between two blow-moulded part halves, wherein the blow-moulded part halves contact the stiffening material exclusively at connecting regions and are connected together at the connecting regions by way of the stiffening material or through the stiffening material, **characterised in that** the stiffening material has air channels, wherein an intermediate space is present between the air channels and the blow-moulded part body.

8. Plastics material blow-moulded part according to claim 7, **characterised in that** the stiffening material is a plate part.

9. Plastics material blow-moulded part according to claim 7 or 8, **characterised in that** the stiffening material has punched cut-outs.

10. Plastics material blow-moulded part according to one of claims 7 to 9, **characterised in that** the stiffening material has functional elements such as straps or brackets for fastening.

11. Plastics material blow-moulded part according to one of claims 7 to 10, **characterised in that** the stiffening material is a natural fibre material.

12. Plastics material blow-moulded part according to one of claims 7 to 11, **characterised in that** the stiffening material is a fibre-reinforced plate or a fibre-reinforced component.

13. Plastics material blow-moulded part according to one of claims 7 to 12, **characterised in that** the stiffening material is a component with functional elements.

14. Plastics material blow-moulded part according to one of claims 7 to 13, **characterised in that** a stiffening material is arranged over the whole area or in part on the outer surface of the blow-moulded part body.

15. Plastics material blow-moulded part according to claim 14, **characterised in that** the stiffening material is strip-shaped.

16. Plastics material blow-moulded part according to claim 13 or 14, **characterised in that** the stiffening material has frangible locations and/or hinge regions.

17. Plastics material blow-moulded part according to one of claims 7 to 16, **characterised in that** the stiffening material is foldable by arrangement of weakened locations.

18. Plastics material blow-moulded part according to one of claims 7 to 17, **characterised in that** the stiffening material has hinge regions or slide regions.

## Revendications

1. Procédé de fabrication d'un élément soufflé en plastique renfermant un renforcement intérieur
**caractérisé par**
les étapes consistant à :
- positionner un matériau de renforcement dans un moule d'extrusion-soufflage ouvert comprenant des canaux de ventilation,
- créer un tube d'extrusion qui se déplace via le matériau de renforcement et l'enveloppe dans sa partie intérieure sans le toucher,
- fermer le moule d'extrusion-soufflage et fabriquer un corps soufflé, les zones du moule amenant des zones de liaison du tube d'extrusion et du matériau de renforcement de sorte que le matériau de renforcement dans les zones de liaison entraîne une liaison intérieure avec le corps soufflé et un intervalle restant entre les canaux de ventilation et le corps soufflé.

2. Procédé selon la revendication 1,
**caractérisé en ce que**
la dimension transversale du matériau de renforcement est inférieure à celle du diamètre correspondant du tube d'extrusion.

3. Procédé selon la revendication 1 ou 2,
**caractérisé en ce que**
le matériau de renforcement présente des zones de déformation de sorte qu'une déformation correspondant au contour du moule d'extrusion-soufflage se produit à la fermeture du moule.

4. Procédé selon la revendication 1 ou 2,
**caractérisé en ce que**
le matériau de renforcement est préformé et sa forme ne se modifie pas à la fermeture du moule d'extrusion-soufflage.

5. Procédé selon l'une quelconque des revendications 1 à 4,
**caractérisé en ce que**
le matériau de renforcement est rabattu et/ou articulé après la création du tube d'extrusion sur des points faibles.

6. Procédé selon l'une quelconque des revendications précédentes,
**caractérisé en ce qu'**
un matériau de renforcement relié en nappe au tube d'extrusion lors de la fabrication du corps soufflé est inséré partiellement ou sur toute la surface dans le moule d'extrusion-soufflage.

7. Elément en plastique soufflé composé d'un corps formé de deux moitiés soufflées, notamment fabriqué suivant l'une quelconque des revendications précédentes, dans lequel un matériau de renforcement est intégré entre deux moitiés soufflées, ces dernières ne touchant le matériau de renforcement qu'aux zones de liaison et étant reliées l'une à l'autre sur les zones de liaison via le matériau de renforcement ou en le traversant,
**caractérisé en ce que**
le matériau de renforcement présente des canaux de ventilation, avec un intervalle restant entre les canaux de ventilation et le corps soufflé.

8. Elément soufflé en plastique selon la revendication 7,
**caractérisé en ce que**
le matériau de renforcement est une pièce de tôle.

9. Elément soufflé en plastique selon la revendication 7 ou 8,
**caractérisé en ce que**
le matériau de renforcement présente des sections estampées.

10. Elément soufflé en plastique selon l'une quelconque des revendications 7 à 9,
**caractérisé en ce que**
le matériau de renforcement présente des éléments fonctionnels tels que des éclisses ou des équerres de fixation.

11. Elément soufflé en plastique selon l'une quelconque des revendications 7 à 10,
**caractérisé en ce que**
le matériau de renforcement est un matériau en fibres naturelles.

12. Elément soufflé en plastique selon l'une quelconque des revendications 7 à 11,
**caractérisé en ce que**
le matériau de renforcement est une plaque renforcée en fibres ou un composant renforcé en fibres.

13. Elément soufflé en plastique selon l'une quelconque des revendications 7 à 12,
**caractérisé en ce que**
le matériau de renforcement est une pièce incorporée munie d'éléments fonctionnels.

14. Elément soufflé en plastique selon l'une quelconque des revendications 7 à 13,
**caractérisé en ce qu'**
un matériau de consolidation est disposé partiellement ou sur toute la surface extérieure du corps soufflé.

15. Elément soufflé en plastique selon la revendication 14,
**caractérisé en ce que**
le matériau de consolidation est en forme de rail.

16. Elément soufflé en plastique selon la revendication 13 ou 14,
**caractérisé en ce que**
le matériau de consolidation présente des points de rupture théoriques et/ou des zones charnières.

17. Elément soufflé en plastique selon l'une quelconque des revendications 7 à 16,
**caractérisé en ce que**
le matériau de renforcement peut être rabattu grâce à la disposition de points faibles.

18. Elément soufflé en plastique selon l'une quelconque des revendications 7 à 17,
**caractérisé en ce que**
le matériau de renforcement présente des zones charnières ou des zones coulissantes.
